# EUROPÄISCHE PATENTSCHRIFT

(11) **EP 3 334 022 B1**
(45) Veröffentlichungstag und Bekanntmachung des Hinweises auf die Patenterteilung: **23.02.2022**
(21) Anmeldenummer: 17197206.0
(22) Anmeldetag: 19.10.2017
(51) Int. Cl.: H02M 1/12, H02M 1/14

(54) **STROMRICHTEREINRICHTUNG FÜR EIN KRAFTFAHRZEUG UND KRAFTFAHRZEUG**
CONVERTER FOR A MOTOR VEHICLE AND MOTOR VEHICLE
DISPOSITIF FORMANT CONVERTISSEUR DE COURANT POUR UN VÉHICULE AUTOMOBILE ET VÉHICULE AUTOMOBILE

(30) Priorität: 08.12.2016 DE 102016224472
(43) Veröffentlichungstag der Anmeldung: 13.06.2018
(73) Patentinhaber: AUDI AG, 85045 Ingolstadt (DE)
(72) Erfinder: Schiedermeier, Maximilian, 85049 Ingolstadt (DE); Rettner, Cornelius, 91052 Erlangen (DE)

(56) Entgegenhaltungen:
- DE-A1-102012 220 247
- US-A- 3 290 578
- US-A1- 2013 308 352
- US-A1- 2014 111 176

## Beschreibung

Die Erfindung betrifft eine Stromrichtereinrichtung für ein Kraftfahrzeug, umfassend eine Schalteinheit, welche mit einem Zwischenkreis der Stromrichtereinrichtung verbunden und mit einer vorgegebenen Schaltfrequenz betreibbar ist, und mehrere im Zwischenkreis verschaltete, jeweils eine Zwischenkreiskapazität aufweisende Filterelemente.

In vollständig oder teilweise elektrisch antreibbaren Fahrzeugen kommen häufig Drehstrommotoren zum Einsatz, die mittels einer Stromrichtereinrichtung, wie beispielsweise einem Frequenzumrichter, angesteuert werden. Dabei bildet eine Schalteinheit mit aus Halbleiterbauelementen gebildeten Halbbrückenschaltungen typischerweise einen Leistungsteil. Letzterer wird über einen Zwischenkreis versorgt, welche insbesondere bei Schaltvorgängen der Schalteinheit auftretende, unerwünschte Wechselströme filtert. Es wurde bereits vorgeschlagen, mehrere jeweils eine Zwischenkreiskapazität aufweisende Filterelemente zu verwenden, um eine breitbandige Filterung dieser Wechselstromanteile zu realisieren. Die Filterung bezweckt insbesondere, eine gegenseitige Beeinflussung von Hochvoltkomponenten im Kraftfahrzeug zu vermeiden, die elektromagnetische Verträglichkeit zu verbessern und die Lebensdauer einer mit der Stromrichtereinrichtung verbunden Batterie zu erhöhen, welche Belastungen mit Wechselströmen gegenüber empfindlich ist.

DE 100 62 075 A1 offenbart einen Umrichter, welcher mit einem einen Ladungsspeichers aufweisenden Spannungszwischenkreis verbunden ist, wobei der Umrichter eine Halbbrücken- oder Brückenschaltung enthält und die Halbbrücken- oder Brückenschaltung Bestandteil eines in einem Gehäuse angeordneten Moduls ist, wobei der Ladungsspeicher mehrere Zwischenkreiskondensatoren aufweist, von denen einer, mehrere oder alle ebenfalls integrierter Bestandteil des Moduls sind.

DE 199 47 476 A1 offenbart einen Umrichter für die Umformung elektrischer Energie für ein Fahrzeugbordnetz mit einer Halbbrücke, die wenigstens einen High-Side- und einen Low-Side-Schalter mit einer vorgebbaren Anzahl von Schaltern umfasst, die einen gemeinsamen Anschluss aufweisen, der mit einem elektrische Energie erzeugenden Mittel und mit einem Kondensator, der parallel zur Halbbrücke liegt, in Verbindung steht.

EP 2 608 389 A1 offenbart eine Stromrichterschaltung, umfassend wenigstens zwei Submodule in Reihenschaltung, die über eine Induktivität elektrische Leistung aus einer eine Gleichspannung abgebenden Leistungsquelle bezieht. Jedes Submodul weist eingangsseitig eine einphasige Halbbrücke und lastseitig eine einphasige Vollbrücke auf, wobei die Halbbrücke, die Vollbrücke und ein Zwischenkreiskondensator gleichspannungsseitig parallel geschaltet sind. Ferner ist eine Entladeschaltung zum Entladen der Zwischenkreiskondensatoren der Submodule parallel zu den in Reihe geschalteten Submodulen und der Induktivität geschaltet.

In DE 10 2012 220 247 A1 wird eine Inverterschaltung zur Ansteuerung eines elektrischen Antriebes beschrieben, bei der durch die Verwendung von zwei Notchfiltern eine verbesserte Unterdrückung von Störsignalen erreicht wird. Dabei wird mit dem ersten Notchfilter die Schaltfrequenz und mit dem zweiten Notchfilter das Doppelte der Schaltfrequenz gefiltert.

Der Erfindung liegt die Aufgabe zugrunde, die Filterung von Wechselspannungsanteilen im Zwischenkreis einer Stromrichtereinrichtung zu verbessern. Diese Aufgabe wird erfindungsgemäß durch eine Stromrichtereinrichtung nach Anspruch 1 gelöst. Vorteilhafte Ausführungsformen sind in den abhängigen Ansprüchen definiert.

Die Erfindung beruht auf der Erkenntnis, dass Wechselspannungsanteile im Zwischenkreis bei Harmonischen der Schaltfrequenz der Schalteinheit auftreten, so dass eine besonders effiziente Filterung ermöglicht wird, wenn ein Minimum des Betragsfrequenzgangs eines jeweiligen Filterelements in der Nähe der Harmonischen liegt. Die Erfindung schlägt vor, die Filterelemente so zu gestalten, dass das von der Zwischenkreiskapazität abhängige Minimum eines jeweiligen Betragsfrequenzgangs innerhalb des Frequenzintervalls liegt, welches eine Harmonische der Schaltfrequenz als Mittelfrequenz umfasst. Mit anderen Worten wird das zu filternde Frequenzspektrum in mehrere Frequenzintervalle eingeteilt, die jeweils eine Harmonische der Schaltfrequenz als Mittelfrequenz aufweisen und eine Intervalllänge von höchstens der Schaltfrequenz aufweisen. Das jeweilige Minimum des Betragsfrequenzgangs der Filterelemente ist dann so zu wählen, dass es in einem der Frequenzintervalle liegt, wobei die Filterelemente jeweils unterschiedliche Harmonische filtern können. Die Schaltfrequenz kann die Taktfrequenz der Schalteinheit sein.

Die einzelnen Filterelemente können so vorteilhafterweise auf die während des Schaltvorgangs der Schalteinheit entstehenden Wechselspannungsanteile im Zwischenkreis angepasst werden. Für jedes Filterelement kann dabei eine besonders günstige oder sogar optimale Zwischenkreiskapazität bestimmt werden. Der Betrag einer jeweiligen Zwischenkreiskapazität kann dadurch verringert werden, wodurch Überdimensionierungen der Filterelemente vermieden und Bauraum- und Kostenvorteile erzielt werden. Zusätzlich werden Spannungsrippel an der der Schalteinheit gegenüber liegenden Seite des Zwischenkreises wirksamer reduziert, was die elektromagnetische Verträglichkeit der Stromrichtereinrichtung verbessert. Der Aufwand für zusätzliche Filter zur Verbesserung der elektromagnetischen Verträglichkeit der Stromrichtereinrichtung kann dadurch reduziert werden oder ganz entfallen, was den Bauraumbedarf und den Kostenaufwand weiter reduziert.

Ein jeweiliges Filterelement kann als Zweitor ausgebildet sein bzw. aufgefasst werden, wobei die Zwischenkreiskapazität eine Querkapazität des Zweitores bildet. Die Filterelemente können in Kette geschaltet sein, wobei ein Filterelement mit einem High-Side-Schaltelement und einem Low-Side-Schaltelement der Schalteinheit verbunden ist. Das Minimum des Betragsfrequenzgangs ist insbesondere ein globales Minimum eines Frequenzbereichs zwischen der halben Schaltfrequenz und ihrem Zehnfachen, insbesondere ihrem Fünffachen.

Es wird bei der erfindungsgemäßen Stromrichtereinrichtung bevorzugt, wenn die Mittelfrequenzen die ersten, der Anzahl der Filterelemente entsprechenden Harmonischen der Schaltfrequenz sind. Versuche haben ergeben, dass in den durch diese Mittelfrequenzen beschriebenen Frequenzintervallen die höchsten Magnituden der unerwünschten Wechselspannung liegen. Dabei kann insbesondere die zweite Harmonische gefiltert werden, die typischerweise die größte Energie aufweist. Alternativ oder zusätzlich kann eine jeweilige Intervalllänge ein Viertel, insbesondere ein Zehntel, der Schaltfrequenz betragen. Die Minima können so wesentlich näher an den jeweiligen Harmonischen liegend gewählt werden, um eine besonders effiziente Filterung der jeweiligen unerwünschten Wechselspannungsanteile zu erzielen.

Die Filterelemente sind bevorzugt als Saugkreis und/oder als Bandstoppfilter und/oder als Kerbfilter ausgebildet. Dabei ist es sowohl denkbar, dass alle Filterelemente vom gleichen der zuvor genannten Filtertypen sind, als auch, dass Kombinationen unterschiedlicher Filtertypen in der Stromrichtereinrichtung verwendet werden. Alle Filtertypen zeichnen sich dadurch aus, dass sie ein Minimum des Betragsfrequenzgangs bei ihrer Resonanz- oder Sperrfrequenz aufweisen, wodurch sie sich besonders für eine Realisierung der Filterelemente der erfindungsgemäßen Stromrichtereinrichtung eignen.

Zur Vorgabe der Minima des Betragsfrequenzgangs der Filterelemente ist es erfindungsgemäß vorgesehen, dass wenigstens ein oder ein jeweiliges Filterelement ein mit seiner Zwischenkreiskapazität in Reihe geschaltetes Induktivitätselement aufweist. Durch passive Bauelemente realisierte Zwischenkreiskapazitäten weisen in der Praxis eine gewisse parasitäre Induktivität auf, die das Minimum des Betragsfrequenzgangs, also beispielsweise eine Resonanzfrequenz, mitbestimmt. Zu einer möglichst präzisen Vorgabe des Minimums des Betragsfrequenzgangs eines Filterelements wird vorgeschlagen, zusätzlich ein mit der Zwischenkreiskapazität in Reihe geschaltetes Induktivitätselement vorzusehen. Ein solches Induktivitätselement bildet mithin eine Querinduktivität des Zweitors.

Erfindungsgemäß ist das Induktivitätselement durch eine Leitungsverbindung zur Zwischenkreiskapazität ausgebildet, deren Länge und/oder Form und/oder Anordnung innerhalb mehrerer Ebenen einer Leiterplatte die Induktivität des Induktivitätselements bestimmt. Es kann also durch ein geeignetes Design der Leitungsverbindung gezielt eine Induktivität generiert werden, deren Betrag sich durch die geometrischen Abmessungen der Leitungsverbindung sehr genau einstellen lässt. Insbesondere bei Verwendung einer Leiterplatte, welche die Leitungsverbindung als Leiterbahn aufweist, kann durch Führung der Leitungsverbindung innerhalb der Ebenen der Leiterplatte eine Einstellung der Induktivität des Induktivitätselements erfolgen.

Gemäß einer Weiterbildung der erfindungsgemäßen Stromrichtereinrichtung ist vorgesehen, dass wenigstens ein oder ein jeweiliges Filterelement ein als Längsinduktivität zur als Querkapazität angeordneten Zwischenkreiskapazität verschaltetes Induktivitätselement aufweist. Es lassen sich so auch komplexere Filterarchitekturen zur Vorgabe eines optimalen Verlaufs des Betragsfrequenzgangs eines jeweiligen Filterelements realisieren.

Erfindungsgemäß ist die Zwischenkreiskapazität eines jeweiligen Filterelements durch einen Kondensator realisiert. Da ein (realer) Kondensator immer auch einen parasitären Reihenwiderstand und die parasitäre Reiheninduktivität aufweist, lässt sich bereits durch die Verwendung eines Kondensators besonders einfach ein geeignetes Filterelement realisieren oder designen.

Erfindungsgemäß sind die Kondensatoren mehrerer Filterelemente oder aller Filterelemente baugleich. Dies betrifft insbesondere die Filterelemente, die das in Reihe zur Zwischenkreiskapazität geschaltete Induktivitätselement und/oder das als Längsinduktivität verschaltete Induktivitätselement aufweisen, da durch das Induktivitätselement oder die Induktivitätselemente eine Variationsmöglichkeit der das Minimum des Betragsfrequenzgangs mitbestimmenden Induktivität gegeben ist. Durch die Verwendung von baugleichen Kondensatoren lässt sich die Stromrichtereinrichtung besonders aufwandsarm und kostengünstig realisieren, da weniger unterschiedliche Bauteile verwendet werden können.

Alternativ oder zusätzlich können die Kondensatoren mehrerer oder aller Filterelemente unterschiedliche Nennkapazitäten und/oder unterschiedliche parasitäre Reiheninduktivitäten aufweisen. Dies betrifft insbesondere Ausführungsformen, in denen die Filterelemente durch einen einzigen Kondensator, also ohne zusätzliche Induktivitätselemente, realisiert sind. Dabei nutzt die Erfindung den Effekt aus, dass mit steigender Kapazität und/oder mit steigender Spannungsbeständigkeit eines Kondensators auch dessen räumliche Ausdehnung steigt, was wiederum einen Anstieg der parasitären Reiheninduktivität zur Folge hat. Durch geeignete Wahl der Kapazität und Dimensionierung der Kondensatoren kann ein auf die Harmonische optimierter Betragsfrequenzgang eines jeweiligen Filterelements verwirklicht werden. Da die Resonanzfrequenz des Filterelements im gegenläufigen Zusammenhang zum Produkt aus der Kapazität und der Induktivität steht, kann für Harmonische höherer Ordnung ein eine geringere Zwischenkreiskapazität realisierender Kondensator verwendet werden. Da die Harmonischen ab der zweiten Ordnung zudem eine fallende Energie aufweisen, können wesentlich bauraumsparendere Kondensatoren zum Einsatz kommen. Besonders kleinbauende Kondensatoren erlauben zudem eine räumlich nähere Anordnung an der Schalteinheit. Außerdem weisen sie geringe Schaltüberspannungen auf.

Bevorzugt sind Anschlüsse der erfindungsgemäßen Stromrichtereinrichtung an der der Schalteinheit abgewandten Seite des Zwischenkreises mit einer Batterie und/oder einer Brennstoffzelle des Kraftfahrzeugs verbindbar oder verbunden.

Der Zwischenkreis kann zusätzlich zwischen dem am nächsten zur Schalteinheit angeordneten Filterelement und der Schalteinheit einen parallel geschalteten Kondensator aufweisen, wobei eine parasitäre Reiheninduktivität des Kondensators und/oder eine Induktivität einer Leitungsverbindung zur Parallelschaltung des Kondensators möglichst gering ist oder sind. Dieser Kondensator dient nicht der Filterungen durch eine spezifische Resonanzfrequenz, sondern soll die sehr hohen Frequenzanteile, welche durch eine Spannungskommutierung bei den Schaltvorgängen der Schalteinheit auftreten, bestmöglich filtern, um die Schaltüberspannungen weiter zu reduzieren. Die der Erfindung zugrunde liegende Aufgabe wird ferner erfindungsgemäß gelöst durch ein Kraftfahrzeug, insbesondere Kraftwagen, umfassend eine erfindungsgemäße Stromrichtereinrichtung. Sämtliche Ausführungen zur erfindungsgemäßen Stromrichtereinrichtung lassen sich analog auf das erfindungsgemäße Kraftfahrzeug übertragen, so dass auch mit diesem die zuvor genannten Vorteile erzielt werden können.

Weitere Vorteile und Einzelheiten der Erfindung ergeben sich aus den im Folgenden beschriebenen Ausführungsbeispielen sowie anhand der Zeichnungen. Diese sind schematische Darstellungen und zeigen:
- Fig. 1: ein Schaltbild eines ersten Ausführungsbeispiels einer erfindungsgemäßen Stromrichtereinrichtung;
- Fig. 2: ein Diagramm eines durch Filterelemente der Stromrichtereinrichtung realisierten Betragsfrequenzgangs;
- Fig. 3: ein Schaltbild eines Ausführungsbeispiels einer nicht erfindungsgemäßen Stromrichtereinrichtung; und
- Fig. 4: eine Prinzipskizze eines Ausführungsbeispiels eines erfindungsgemäßen Kraftfahrzeugs.

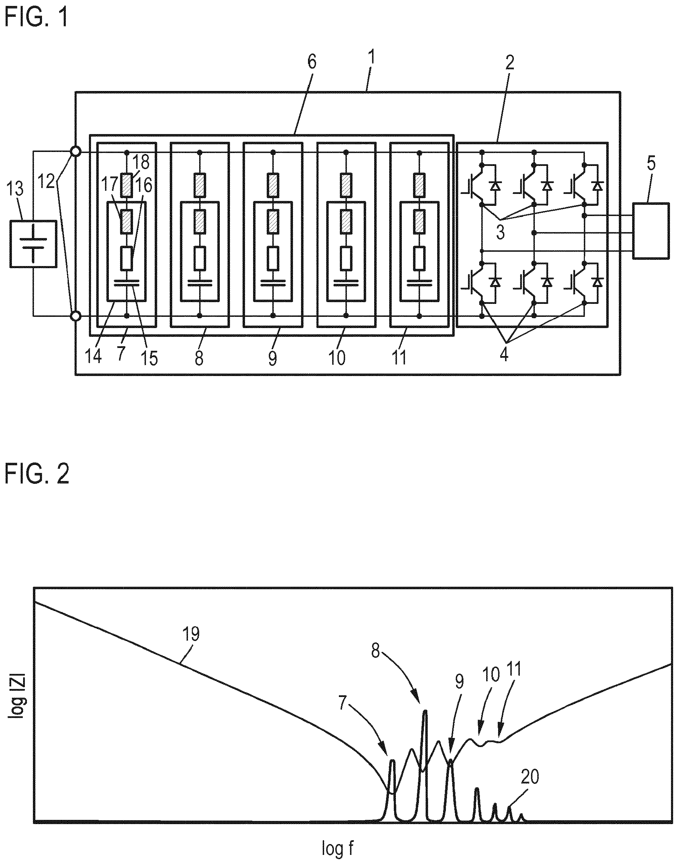

Fig. 1 zeigt ein Schaltbild eines ersten Ausführungsbeispiels einer Stromrichtereinrichtung 1, umfassend eine Schalteinheit 2, welche aus mehreren zu Halbbrücken verschalteten High-Side-Schaltelementen 3 und Low-Side-Schaltelementen 4 auf Halbleiterbasis gebildet ist und eine mehrphasige Wechselspannung für einen Elektromotor 5 bereitstellt. Außerdem weist die Stromrichtereinrichtung 1 einen Zwischenkreis 6 mit mehreren Filterelementen 7-11 und Anschlüsse 12 auf der der Schalteinheit 2 abgewandten Seite des Zwischenkreises 6 auf, die mit einer Energiequelle 13, beispielsweise einer Batterie und/oder einer Brennstoffzelle verbunden oder verbindbar sind.

Während des Betriebs der Stromrichtereinrichtung 1 werden die Schaltelemente 3, 4 mittels einer nicht gezeigten Steuereinrichtung mit einer Schaltfrequenz getaktet, um eine Ausgangsgleichspannung der Energiequelle 13 in die mehrphasige Wechselspannung zur Versorgung des Elektromotors 5 zu wandeln. Durch diese Schaltvorgänge, die unter induktiver Last erfolgen, entstehen Spannungsspitzen im Zwischenkreis 6, die unerwünschte Wechselspannungsanteile enthalten. Diese Wechselspannungsanteile belasten zum einen die Energiequelle 13 mit Wechselströmen, was die Lebensdauer der Energiequelle 13 verringern kann. Zum andern führen die Wechselspannungsanteile zu unerwünschten elektromagnetischen Abstrahlungen. Die Filterelemente 7-11 sind dementsprechend dazu ausgebildet, die unerwünschten Wechselspannungsanteile zu filtern.

Die Filterelemente 7-11 sind Zweitore und in Kettenschaltung zwischen der Schalteinheit 2 und den Anschlüssen 12 angeordnet. Jedes Filterelement 7-11 umfasst dabei einen Kondensator 14, der eine Zwischenkreiskapazität 15 realisiert. Daneben weist der Kondensator einen inneren ohmschen Widerstand 16 und eine parasitäre Reiheninduktivität 17 auf. Die Zwischenkreiskapazität 15 wirkt folglich als Querkapazität des Zweitors. Die Filterelemente 7-11 weisen darüber hinaus jeweils ein in Reihe zum Kondensator 14 geschaltetes erstes Induktivitätselement 18 auf. Dieses ist durch eine Leitungsverbindung, insbesondere durch eine Leiterbahn einer Leiterplatte, zum Kondensator 14 bzw. seiner Zwischenkreiskapazität 15 gebildet. Durch die Länge, die Form und die Anordnung der Leiterbahn innerhalb mehrerer Ebenen der Leiterplatte ist die Induktivität des ersten Induktivitätselements 18 vorgebbar. Alternativ kann das erste Induktivitätselement 18 ein mit dem Kondensator 14 verbundener Draht mit einer die Induktivität vorgebenden Länge und Form sein.

Mithin bildet ein jeweiliges Filterelement 7-11 einen Saugkreis aus, dessen Resonanzfrequenz durch die Zwischenkreiskapazität 15 und die Summe der parasitären Reiheninduktivität 17 und der Induktivität des ersten Induktivitätselements 18 als Querinduktivität des Filterelements 7-11 bestimmt ist. Bei dieser Resonanzfrequenz wird die Impedanz eines jeweiligen Filterelements 7-11 minimal. D.h., dass Wechselspannungen im Zwischenkreis in der Nähe einer jeweiligen Resonanzfrequenz der Filterelemente 7-11 gedämpft werden. Die parasitäre Reiheninduktivität 17 hängt dabei vor allem von der räumlichen Größe des Kondensators 14 ab, welche wiederum in Wechselbeziehung zum Betrag der Zwischenkreiskapazität 15 und seiner Spannungsfestigkeit steht. Die Resonanzfrequenz und damit das Minimum der Impedanz kann daher zum einen durch das Design des Kondensators 14 und zum anderen durch die Induktivität des ersten Induktivitätselements 18 präzise vorgegeben werden. In diesem Zusammenhang können baugleiche Kondensatoren 14 mit identischer Nennkapazität verwendet werden, wobei die Resonanzfrequenzen der Filterelemente 7-11 untereinander durch Variation der Induktivität des ersten Induktivitätselements 18 vorgegeben wird. Alternativ ist es in einer nicht erfindungsgemäßen Ausgestaltung möglich, auf das erste Induktivitätselement 18 zu verzichten und die Resonanzfrequenz allein durch die geometrische Ausgestaltung der Kondensatoren 14 vorzugeben.

Die Filterelemente 7-11 zeichnen sich dadurch aus, dass sie jeweils eine unterschiedliche Resonanzfrequenz aufweisen, so dass ihre Betragsfrequenzgänge unterschiedliche Minima entsprechend der Resonanzfrequenzen aufweisen. Die Zwischenkreiskapazität 15, die parasitäre Reiheninduktivität 17 und die Induktivität des ersten Induktivitätselements 18 sind so gewählt, dass das Minimum des Betragsfrequenzgangs eines jeweiligen Filterelements 7-11 innerhalb eines Frequenzintervalls liegt, welches eine der Schaltfrequenz entsprechende Intervalllänge aufweist. Die Mittelfrequenzen der Frequenzintervalle entsprechen den ersten fünf Harmonischen der Schaltfrequenz, d.h. das Filterelement 7 realisiert eine Filterung der der Schaltfrequenz entsprechenden ersten Harmonischen, das Filterelement 8 die Filterung der dem Doppelten der Schaltfrequenz entsprechenden zweiten Harmonischen usw. Die Intervalllängen können dabei auch enger gefasst sein, beispielsweise ein Viertel oder ein Zehntel der Schaltfrequenz betragen, um ein jeweiliges Minimum des Betragsfrequenzgangs näher bei der zu filternden Harmonischen zu wählen.

Fig. 2 zeigt ein Diagramm eines durch die Filterelemente 7-11 der Stromrichtereinrichtung 1 realisierten Betragsfrequenzgangs 19. Dabei ist der Logarithmus des Betrags der Impedanz Z über den Logarithmus der Frequenz f aufgetragen. Zudem ist rein qualitativ das Spektrum der zu filternden Wechselspannung im Zwischenkreis 6 aufgetragen. Dabei ist zu beachten, dass das in Fig. 2 gezeigte Diagramm lediglich der qualitativen Verdeutlichung der Filtereigenschaften der Filterelemente 7-11 dient und nicht notwendigerweise maßstabsgetreu ist.

Die Minima der Filterelemente 7-11 ergeben den Betragsfrequenzgang 19 mit insgesamt fünf lokalen Minima, die unerwünschte Spektralanteile im Zwischenkreis 6 dämpfen. Dabei können selbstverständlich auch mehr oder weniger als die in Fig. 1 gezeigten Filterelemente 7-11 verwendet werden, wenn für das angestrebte Filterungsergebnis auch höhere Harmonische als die fünfte Harmonische zu filtern sind oder eine Filterung einer geringeren Anzahl von Harmonischen ausreicht.

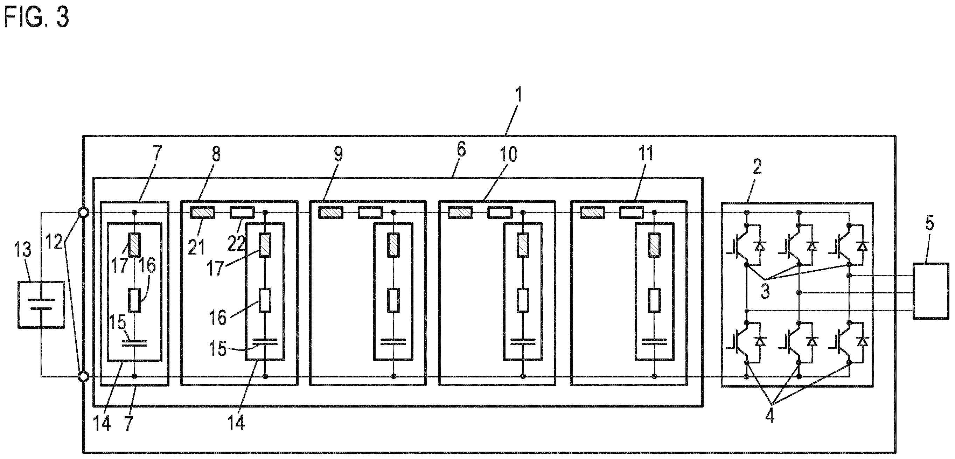

Fig. 3 zeigt ein Schaltbild eines weiteren Ausführungsbeispiels einer Stromrichtereinrichtung 1, die der in Fig. 1 Gezeigten entspricht, wobei gleiche oder gleichwirkende Komponenten mit identischen Bezugszeichen versehen sind. Die in Fig. 3 gezeigte Stromrichtereinrichtung 1 unterscheidet sich im Wesentlichen dadurch, dass die Filterelemente 8-11 anstelle des ersten Induktivitätselements 18 ein als Längsinduktivität angeordnetes zweites Induktivitätselement 21 aufweisen. In Reihe dazu ist ferner ein ohmscher Leitungswiderstand 22 dargestellt.

Die Filterelemente 8-11 realisieren ebenfalls jeweils ein Filter mit einem Minimum des Betragsfrequenzgangs, das analog zu der Resonanzfrequenz des Saugkreises des Filterelements 7 vorgebbar ist. Durch entsprechende Wahl der Zwischenkreiskapazitäten 15, der parasitären Längsinduktivitäten 17 und der Induktivitäten der zweiten Induktivitätselemente 21 ist so eine den in Fig. 2 gezeigten Betragsfrequenzgangs 19 realisierende Filterarchitektur ausgebildet.

Gemäß einem weiteren, nicht erfindungsgemäßen Ausführungsbeispiel können alle Filterelemente 7-11 entsprechend den in Fig. 3 gezeigten Filterelementen 8-11 ausgebildet sein. Darüber hinaus sind für alle oder einzelne Filterelemente 7-11 auch andere Filtertypen denkbar, beispielsweise ein Bandstoppfilter oder ein Kerbfilter.

Gemäß einem weiteren Ausführungsbeispiel einer Stromrichtereinrichtung 1, das einem der vorgenannten Ausführungsbeispiele entspricht, ist zwischen dem am nächsten zur Schalteinheit 2 angeordneten Filterelement 11 und der Schalteinheit 2 ein zusätzlicher Kondensator (nicht gezeigt) parallel geschaltet. Dieser Kondensator dient nicht der Filterungen durch eine spezifische Resonanzfrequenz, sondern soll die sehr hohen Frequenzanteile, welche durch eine Spannungskommutierung bei den Schaltvorgängen der Schalteinheit 2 auftreten, bestmöglich filtern, um die Schaltüberspannungen über den Schaltelementen 3, 4 weiter zu reduzieren. Der Kondensator, beispielsweise ein Keramikkondensator, ist hinsichtlich seiner parasitären Reiheninduktivität (entsprechend der Reiheninduktivität 17 im den Kondensator 14 darstellenden Ersatzschaltbild) so gering wie möglich gewählt. Auch die Leitungsverbindungen dieses Kondensators zur Parallelschaltung im Zwischenkreis 6 werden hinsichtlich ihrer Kapazität möglichst niederinduktiv ausgebildet.

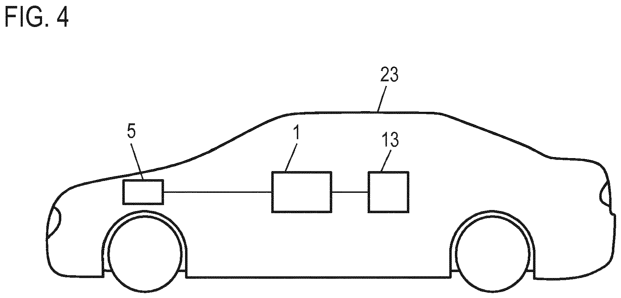

Fig. 4 zeigt eine Prinzipskizze eines Ausführungsbeispiels eines Kraftfahrzeugs 23, umfassend eine Energiequelle 13 in Form einer Batterie und/oder Brennstoffzelle, eine der Energiequelle 13 nachgeschaltete Stromrichtereinrichtung 1 gemäß einem der zuvor beschriebenen Ausführungsbeispiele und einen Elektromotor 5, der zum teilweisen oder vollständigen Antrieb des Kraftfahrzeugs 23 ausgebildet ist und mittels der Energiequelle 13 über die Stromrichtereinrichtung 1 versorgt wird.

## Patentansprüche

1. Stromrichtereinrichtung für ein Kraftfahrzeug, umfassend eine Schalteinheit (2), welche mit einem Zwischenkreis (6) der Stromrichtereinrichtung (1) verbunden und mit einer vorgegebenen Schaltfrequenz betreibbar ist, und mehrere im Zwischenkreis (6) verschaltete, jeweils eine Zwischenkreiskapazität (15) aufweisende Filterelemente (7-11), wobei ein Minimum des Betragsfrequenzgangs eines jeweiligen Filterelements (7-11) innerhalb eines anderen Frequenzintervalls, welches eine Harmonische der Schaltfrequenz als Mittelfrequenz und eine der Schaltfrequenz entsprechende Intervalllänge aufweist, liegt als ein jeweiliges Minimum des Betragsfrequenzgangs der übrigen Filterelemente (7-11), wobei die Zwischenkreiskapazität (15) eines jeweiligen Filterelements (7-11) durch einen Kondensator (14) realisiert ist, wobei wenigstens ein oder ein jeweiliges Filterelement (7-11) ein mit seiner Zwischenkreiskapazität (15) in Reihe geschaltetes Induktivitätselement (18) aufweist,
**dadurch gekennzeichnet,**
**dass** das Induktivitätselement (18) durch eine Leitungsverbindung zur Zwischenkreiskapazität (15) ausgebildet ist, deren Länge und/oder Form und/oder Anordnung innerhalb mehrerer Ebenen einer Leiterplatte die Induktivität des Induktivitätselements (18) bestimmt, wobei die Kondensatoren (14) mehrerer Filterelemente (7-11) oder aller Filterelemente (7-11) baugleich sind.

2. Stromrichtereinrichtung nach Anspruch 1,
**dadurch gekennzeichnet,**
**dass** die Mittelfrequenzen die ersten, der Anzahl der Filterelemente (7-11) entsprechenden Harmonischen der Schaltfrequenz sind, und/oder eine jeweilige Intervalllänge ein Viertel, insbesondere ein Zehntel, der Schaltfrequenz beträgt.

3. Stromrichtereinrichtung nach Anspruch 1 oder 2,
**dadurch gekennzeichnet,**
**dass** die Filterelemente (7-11) als Saugkreis und/oder als Bandstoppfilter und/oder als Kerbfilter ausgebildet sind.

4. Stromrichtereinrichtung nach einem der vorhergehenden Ansprüche,
**dadurch gekennzeichnet,**
**dass** wenigstens ein oder ein jeweiliges Filterelement (8-11) ein als Längsinduktivität zur als Querkapazität angeordneten Zwischenkreiskapazität (15) verschaltetes Induktivitätselement (21) aufweist.

5. Stromrichtereinrichtung nach einem der vorhergehenden Ansprüche,
**dadurch gekennzeichnet,**
**dass** die Kondensatoren (14) mehrerer oder aller Filterelemente (7-11) unterschiedliche Nennkapazitäten und/oder unterschiedliche parasitäre Reiheninduktivitäten (17) aufweisen.

6. Stromrichtereinrichtung nach einem der vorhergehenden Ansprüche,
**dadurch gekennzeichnet,**
**dass** Anschlüsse (12) der Stromrichtereinrichtung (1) an der der Schalteinrichtung (2) abgewandten Seite des Zwischenkreises (6) mit einer Batterie und/oder einer Brennstoffzelle des Kraftfahrzeugs (23) verbindbar oder verbunden sind.

7. Stromrichtereinrichtung nach einem der vorhergehenden Ansprüche,
**dadurch gekennzeichnet,**
**dass** der Zwischenkreis (6) kann zusätzlich zwischen dem am nächsten zur Schalteinheit (2) angeordneten Filterelement (11) und der Schalteinheit (2) einen parallel geschalteten Kondensator aufweist, wobei eine parasitäre Reiheninduktivität des Kondensators und/oder eine Induktivität einer Leitungsverbindung zur Parallelschaltung des Kondensators möglichst gering ist oder sind.

8. Kraftfahrzeug, umfassend eine Stromrichtereinrichtung (1) nach einem der vorhergehenden Ansprüche.

## Claims

1. Converter for a motor vehicle, comprising a switching unit (2) which is connected to an intermediate circuit (6) of the converter (1) and which can be operated with a predetermined switching frequency, and several filter elements (7-11) connected in the intermediate circuit (6) having respectively one intermediate circuit capacitor (15), wherein a minimum of the magnitude frequency response of a respective filter element (7-11) lies within another frequency interval, which has a harmonic of the switching frequency as a centre frequency and an interval length corresponding to the switching frequency, than a perspective minimum of the magnitude frequency response of the remaining filter elements (7-11), wherein the intermediate circuit capacitor (15) of a respective filter element (7-11) is realised by a capacitor (14), wherein at least one or a respective filter element (7-11) has an inductance element (18) connected in series with its intermediate circuit capacitor (15),
**characterised in**
**that** the inductivity element (18) is formed by a line connection to the intermediate circuit capacitor (15), the length and/or shape and/or arrangement of which within several planes of a circuit board specifies the inductance of the inductance element (18), wherein the capacitors (14) of several filter elements (7-11) or of all filter elements (7-11) are identical in construction.

2. Converter according to claim 1,
**characterised in**
**that** the centre frequencies of the first harmonics, corresponding to the number of the filter elements (7-11), are the switching frequency, and/or a respective interval length is a quarter, in particular a tenth, of the switching frequency.

3. Converter according to claim 1 or 2,
**characterised in**
**that** the filter elements (7-11) are configured as an absorption circuit and/or as a bandstop filter and/or as a notch filter.

4. Converter according to any of the preceding claims,
**characterised in**
**that** at least one or a respective filter element (8-11) has an inductance element (21) connected as a longitudinal inductance to the intermediate circuit capacitor (15) arranged as a transverse inductance.

5. Converter according to any of the preceding claims,
**characterised in**
**that** the capacitors (14) of several or all filter elements (7-11) have different nominal capacities and/or different parasitic series inductances (17).

6. Converter according to any of the preceding claims,
**characterised in**
**that** terminals (12) of the converter (1) can be connected or are connected to a battery or a fuel cell of the motor vehicle (23) at the side of the intermediate circuit (6) facing away from the switching unit (2).

7. Converter according to any of the preceding claims,
**characterised in**
**that** the intermediate circuit (6) can in addition has, between the filter element (11) arranged closest to the switching unit (2) and the switching unit (2), a capacitor connected in parallel, wherein a parasitic series inductance of the capacitor and/or an inductance of a line connection to the parallel circuit of the capacitor is or are as small as possible.

8. Motor vehicle comprising a converter (1) according to any of the preceding claims.

## Revendications

1. Dispositif de convertisseur pour un véhicule automobile, comprenant une unité de commutation (2) qui est connectée à un circuit intermédiaire (6) du dispositif de convertisseur (1) et qui peut fonctionner à une fréquence de commutation prédéfinie, et plusieurs éléments de filtre (7-11) montés dans le circuit intermédiaire (6) et présentant respectivement une capacité de circuit intermédiaire (15), dans lequel un minimum de la réponse de fréquence absolue d'un élément de filtre respectif (7-11) se situe à l'intérieur d'un autre intervalle de fréquence, lequel présente un harmonique de la fréquence de commutation en tant que fréquence moyenne et une longueur d'intervalle correspondant à la fréquence de commutation, en tant qu'un minimum respectif de la réponse de fréquence absolue des autres éléments de filtre (7-11), dans lequel la capacité de circuit intermédiaire (15) d'un élément de filtre respectif (7-11) est réalisée par un condensateur (14), dans lequel au moins un élément de filtre ou un élément de filtre respectif (7-11) présente un élément d'inductance (18) monté en série avec sa capacité de circuit intermédiaire (15),
**caractérisé en ce**
**que** l'élément d'inductance (18) est formé par une connexion de ligne vers la capacité de circuit intermédiaire (15), dont la longueur et/ou la forme et/ou la disposition à l'intérieur de plusieurs plans d'une carte de circuit imprimé détermine l'inductance de l'élément d'inductance (18), dans lequel les condensateurs (14) de plusieurs éléments de filtre (7-11) ou de tous les éléments de filtre (7-11) sont de construction identique.

2. Dispositif de convertisseur selon la revendication 1,
**caractérisé en ce**
**que** les fréquences moyennes sont les premiers harmoniques de la fréquence de commutation correspondant au nombre d'éléments de filtre (7-11), et/ou qu'une longueur d'intervalle respective est égale à un quart, en particulier à un dixième, de la fréquence de commutation.

3. Dispositif de convertisseur selon la revendication 1 ou 2,
**caractérisé en ce**
**que** les éléments de filtre (7-11) sont réalisés en tant que circuit d'aspiration et/ou de filtre d'arrêt de bande et/ou de filtre coupe-bande.

4. Dispositif de convertisseur selon l'une quelconque des revendications précédentes,
**caractérisé en ce**
**qu'**au moins un élément de filtre ou un élément de filtre respectif (8-11) présente un élément d'inductance (21) monté en tant qu'inductance longitudinale à la capacité de circuit intermédiaire (15) disposée en tant que capacité transversale.

5. Dispositif de convertisseur selon l'une quelconque des revendications précédentes,
**caractérisé en ce**
**que** les condensateurs (14) de plusieurs ou de tous les éléments de filtre (7-11) présentent des capacités nominales différentes et/ou des inductances série parasites (17) différentes.

6. Dispositif de convertisseur selon l'une quelconque des revendications précédentes,
**caractérisé en ce**
**que** des raccords (12) du dispositif de convertisseur (1) peuvent être connectés ou sont connectés à une batterie et/ou à une pile à combustible du véhicule automobile (23) sur le côté du circuit intermédiaire (6) opposé au dispositif de commutation (2).

7. Dispositif de convertisseur selon l'une quelconque des revendications précédentes,
**caractérisé en ce**
**que** le circuit intermédiaire (6) peut en outre présenter, entre l'élément de filtre (11) disposé le plus près de l'unité de commutation (2) et l'unité de commutation (2), un condensateur monté en parallèle, dans lequel une inductance série parasite du condensateur et/ou une inductance d'une connexion de ligne pour un circuit parallèle du condensateur est ou sont aussi faibles que possible.

8. Véhicule automobile, comprenant un dispositif de convertisseur (1) selon l'une quelconque des revendications précédentes.
